# EUROPÄISCHE PATENTSCHRIFT

(11) **EP 0 881 411 B1**
(45) Veröffentlichungstag und Bekanntmachung des Hinweises auf die Patenterteilung: **14.08.2002**
(21) Anmeldenummer: 98106634.3
(22) Anmeldetag: 09.04.1998
(51) Int. Cl.: F16H 55/18

(54) **Getriebezahnrad**
Gear wheel
Roue dentée

(30) Priorität: 26.05.1997 DE 19721851
(43) Veröffentlichungstag der Anmeldung: 02.12.1998
(73) Patentinhaber: Bayerische Motoren Werke Aktiengesellschaft, 80788 München (DE)
(72) Erfinder: Weber, Günter, 7572 D. Kaltenbrunn (AT); Samitsch, Heinrich, 8010 Graz (AT); Mohorko, Eduard, 8071 Hausmannstätten (AT)

(56) Entgegenhaltungen:
- DE-A- 2 439 317
- FR-A- 719 166
- GB-A- 256 254
- PATENT ABSTRACTS OF JAPAN vol. 013, no. 020 (M-785), 18. Januar 1989 (1989-01-18) & JP 63 231064 A (JIDOSHA KIKI CO LTD), 27. September 1988 (1988-09-27)
- PATENT ABSTRACTS OF JAPAN vol. 011, no. 057 (M-564), 21. Februar 1987 (1987-02-21) & JP 61 218867 A (MITSUBISHI HEAVY IND LTD), 29. September 1986 (1986-09-29)
- PATENT ABSTRACTS OF JAPAN vol. 014, no. 069 (M-0932), 8. Februar 1990 (1990-02-08) & JP 01 288664 A (MEIDENSHA CORP), 20. November 1989 (1989-11-20)

## Beschreibung

Die Erfindung betrifft ein Getriebezahnrad nach dem Oberbegriff des Hauptanspruchs.

Aus der gattungsgemäßen DE 24 39 317 A ist ein durch ein Metallzahnrad und ein damit verbundenes Kunststoffzahnrad gebildetes Zahnradpaar bekannt, wobei das Kunststoffzahnrad eine etwas größere Zahndicke als das Metallzahnrad hat. Die Zähne des Kunststoffzahnrads stehen also in Umfangsrichtung etwas über die des Metallzahnrads hervor. Die Zahndicke des Kunststoffzahnrad weist in Bezug auf die Zahnlücke eines mit den beiden Zahnrädem kämmenden Gegenzahnrades ein gewisses Übermaß auf, wodurch ein flankenspielfreier Antrieb erreicht werden soll.

Es ist bereits bekannt, zum Verringern des Zahnflankenspiels bei kämmenden Zahnrädem, ein Zahnrad so auszubilden, daß Zahnflanken einer Zahnlinie mit dem kämmenden Zahnrad kurz nacheinander in Eingriff kommen. Dazu besteht ein Rad eines Paares miteinander kämmender Zahnräder aus zwei Zahnkränzen, von denen der eine die Drehmomentübertragung und der andere den Spielausgleich übernimmt und die gegeneinander durch eine Feder in Umfangsrichtung vorgespannt sind. Ein solches Zahnrad beschreibt das deutsche Gebrauchsmuster 74 00 276.

Desweiteren ist aus US 1 746 178 bekannt, ein Zahnrad aus zwei leicht versetzt zueinander angeordneten Zahnscheiben mit gleicher Verzahnung zu gestalten, wobei beide Zahnscheiben einstellbar, aber fest miteinander verbunden sind. Dieses Zahnrad dient dazu, durch Versetzen der beiden Zahnscheiben zueinander, das Zahnflankenspiel mit dem kämmenden Zahnrad einstellen zu können. Auf diese Weise kann zum Beispiel durch Verstellen der Zahnscheiben Verschleiß ausgeglichen werden.

Von einem solchen Zahnrad, aus zwei fest miteinander verbundenen Zahnradelementen, geht die Erfindung als nächstliegendem Stand der Technik aus und hat die Aufgabe, zusätzlich noch, unabhängig vom Verschleiß, die beim Zusammenwirken von kämmenden Zahnrädern entstehenden Geräusche zu dämpfen.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung sind die Zähne mindestens eines Zahnradelements in ihrer Elastizität so ausgebildet, daß beim Eingriff des kämmenden Zahnrades, mindestens ab einem bestimmten übertragenen Drehmoment, die Versetzung in Umfangsrichtung des dieses Drehmoment übertragenden Zahnes gegenüber dem Zahn des anderen Zahnradelements durch Verformung mindestens teilweise aufgehoben wird.

Damit wird vorteilhafterweise eine sehr gute Geräuschdämpfung erreicht, das sogenannte Zahnradklackem verhindert. Außerdem ist unter Last das ursprünglich vorhandene Zahnflankenspiel wieder hergestellt und beide Zahnradelemente werden vorteilhafterweise zur Drehmomentübertragung mit dem kämmenden Zahnrad benutzt, obwohl sie fest und unverschieblich zueinander, versetzt miteinander verbunden sind.

Bevorzugte Ausführungen der Erfindung zeichnen sich durch die nachfolgend beschriebenen Vorteile aus.

Wenn mindestens ein Zahnradelement aus Metall und/oder Sinterwerkstoff besteht, ist gute Verschleißfestigkeit gegeben.

Besitzen die beiden Zahnradelemente dieselbe Zahnform, sind sie einfach miteinander herzustellen. Werden diese dann bei ihrer Montage, koaxial und in Umfangsrichtung zueinander unverschieblich, am Teilkreisdurchmesser um etwa 1/10 mm zueinander versetzt, wird das beim Kämmen mit dem im Eingriff befindlichen Zahnrad entstehende Geräusch optimal gedämpft.

Günstig für den Eingriff mit dem kämmenden Zahnrad ist es, wenn beide Zahnradelemente den selben Kopfkreisdurchmesser haben und das Zahnradelement mit den sich verformenden Zähnen einen kleineren Fußkreisdurchmesser besitzt. Dies ist auch günstig für die bei der Verformung auftretenden Kräfte und den Verschleiß.

Einfach zu fertigen ist das Zahnradelement mit den sich verformenden Zähnen und den oben genannten Eigenschaften, wenn es mittig in den Zahnlücken entsprechend der Zahnteilung in radialer Richtung Einschnitte besitzt.

Dabei ist es preiswert herzustellen, wenn es als ebene Zahnscheibe ausgebildet ist. Eine solche Zahnscheibe aus einem Blech aus Federstahl zu fertigen, ist wiederum günstig für die Kraftverhältnisse und den Verschleiß bei der Drehmomentübertragung.

Die feste Verbindung zwischen den beiden Zahnradelementen kann auf einfache Weise durch Schrauben hergestellt werden. Dabei kann es sich aus Platzgründen im Getriebegehäuse vorteilhaft erweisen, wenn das Zahnradelement mit den sich verformenden Zähnen als tellerförmig eingezogene Zahnscheibe ausgebildet ist, wobei dann der Fußkreis und der Kopfkreis der Zähne in axialer Richtung gesehen zueinander versetzt sind. Letztere Eigenschaft beeinflußt auch noch die Kraftübertragung günstig.

Ein bevorzugtes Ausführungsbeispiel ist in der nachfolgenden Beschreibung und der zugehörigen Zeichnung näher dargestellt. Es zeigen:
- Figur 1: einen Teil einer Vorgelegewelle mit einem Getriebezahnrad entsprechend der Erfindung, wobei das Zahnradelement mit den sich verformenden Zähnen als ebene Zahnscheibe ausgebildet ist,
- Figur 2: eine Vorgelegewelle ähnlicher Anordnung, wobei das Zahnradelement mit den sich verformenden Zähnen als tellerförmig eingezogene Zahnscheibe ausgebildet ist,
- Figur 3: einen Teilschnitt der tellerförmig eingezogenen Zahnscheibe in vergrößerter Darstellung und
- Figur 4: eine Draufsicht auf die ebene Zahnscheibe.

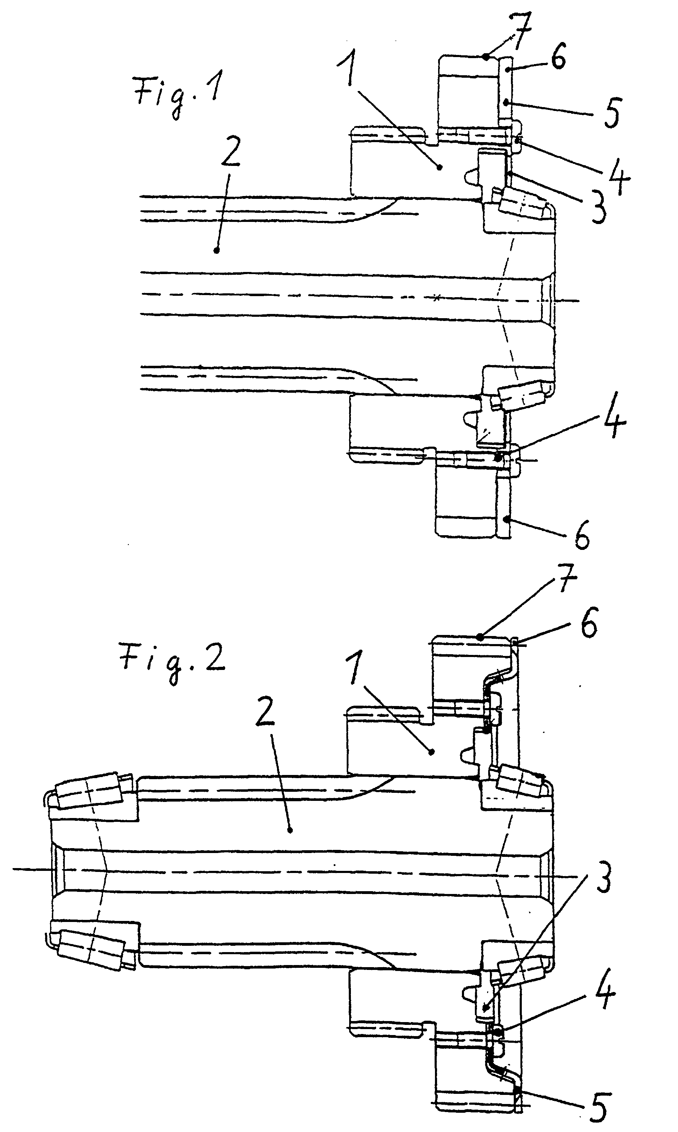

Nach Figur 1 besteht ein Getriebezahnrad einer Vorgelegewelle 2 aus zwei Zahnradelementen, indem ein Zahnradelement, eine Zahnscheibe 3, durch Schrauben 4 fest mit einem anderen Zahnradelement 1 verbunden ist. Die Zahnscheibe 3 ist ein Blech aus Federstahl, ihr Zahnprofil ist deckungsgleich mit dem des anderen Zahnradelementes 1 und sie ist entweder eben (Figur 1) oder tellerförmig eingezogen (Figur 2) ausgebildet. Die Zahnscheibe 3 weist entsprechend der Zahnteilung tiefe Einschnitte 5 auf und ist gegenüber dem anderen Zahnradelement 1 in Umfangsrichtung geringfügig versetzt Dadurch können sich die einzelnen Zähne 6 der Zahnscheibe 3 beim Kämmen mit dem nicht gezeichneten in Eingriff befindlichen Gegenzahnrad geringfügig verbiegen, bis ihre Zahnflanken deckungsgleich mit denen der Zähne 7 des anderen Zahnradelements 1 sind. Dadurch wird eine Geräuschdämpfung erreicht, ohne nennenswerten Verschleiß am anderen Zahnradelement 1 oder an der Zahnscheibe 3 bzw. am Gegenzahnrad.

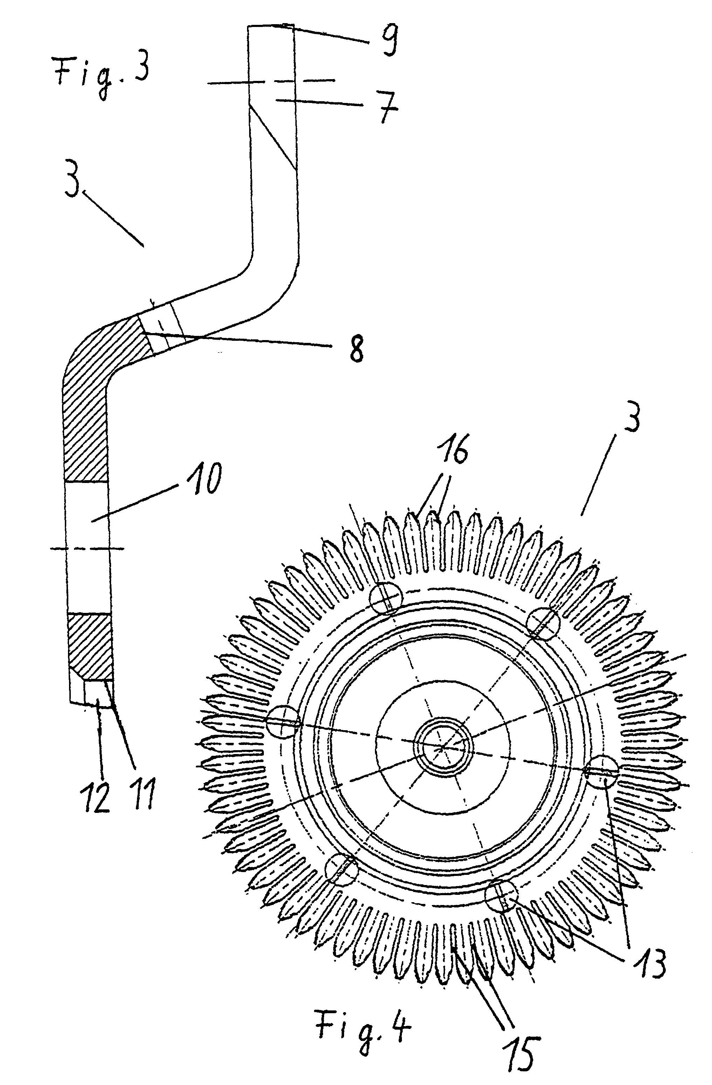

Figur 3 zeigt in vergrößertem Maßstab einen Teilquerschnitt durch die Zahnscheibe 3 im Bereich der Zähne 7. Es handelt sich hier um die tellerförmig eingezogene Zahnscheibe 3 entsprechend Figur 2, wobei der Fußkreis 8 und der Kopfkreis 9 der Zähne 7 in axialer Richtung gesehen zueinander versetzt sind. Eine Bohrung 10 dient der Verschraubung mit dem nicht gezeichneten anderen Zahnradelement 1 mittels nicht gezeichneter Schrauben 4. Die Zentrierung der Zahnscheibe 3 am anderen Zahnradelement 1 übernimmt die Innenfläche 11 einer mittigen Bohrung 12 in der Zahnscheibe 3.

Figur 4 zeigt die ebene Zahnscheibe 3 aus Figur 1 in Draufsicht, verbunden mit dem dahinterliegenden anderen Zahnradelement 1. Sichtbar sind die Köpfe 13 der Schrauben 4, die die Zahnscheibe 3 fest mit dem anderen Zahnradelement 1 verbinden. Desweiteren, angedeutet durch die Strichstärke, der Versatz der Zahnflanken 16 von Zahnscheibe 3 und anderem Zahnradelement 1 in Umfangsrichtung um etwa 1/10 mm am Teilkreisdurchmesser in Uhrzeigerrichtung. Die Zahnscheibe 3 ist mittig in den Zahnlücken, entsprechend der Zahnteilung, in radialer Richtung tiefer eingeschnitten als das andere Zahnradelement 1, hier sichtbar an den Einschnitten 15, die hier bis in die Nähe der Köpfe 13 der Befestigungsschrauben 4 reichen.

## Patentansprüche

1. Getriebezahnrad aus mindestens zwei an ihrem Umfang mit Zähnen (6,7) versehenen Zahnradelementen, die koaxial und in Umfangsrichtung unverschieblich und mit zueinander versetzten Zähnen (6,7) miteinander so verbunden sind, daß für den Eingriff eines kämmenden Zahnrades das vorhandene Zahnflankenspiel verringert oder aufgehoben wird, wobei mindestens die Zähne (6) eines Zahnradelements (3) in ihrer Elastizität so ausgebildet sind, daß beim Eingriff des kämmenden Zahnrades, mindestens ab einem bestimmten übertragenen Drehmoment, die Versetzung in Umfangsrichtung des dieses Drehmoment übertragenden Zahnes (6) gegenüber dem Zahn (7) des anderen Zahnradelements (1) durch Verformung mindestens teilweise aufgehoben wird,
**dadurch gekennzeichnet, dass**
das Zahnradelement mit den sich verformenden Zähnen (6) mittig in den Zahnlücken entsprechend der Zahnteilung in radialer Richtung Einschnitte (5, 15) aufweist.

2. Getriebezahnrad nach Anspruch 1, **dadurch gekennzeichnet, daß** mindestens ein Zahnradelement aus metallischem Werkstoff besteht.

3. Getriebezahnrad nach Anspruch 1 oder 2, **dadurch gekennzeichnet, daß** beide Zahnradelemente den selben Durchmesser am Kopfkreis (9) haben.

4. Getriebezahnrad nach einem der Ansprüche 1 bis 3, **dadurch gekennzeichnet, daß** das Zahnradelement mit den sich verformenden Zähnen (6) einen kleineren Durchmesser am Fußkreis (8) besitzt.

5. Getriebezahnrad nach einem der Ansprüche 1 bis 4, **dadurch gekennzeichnet, daß** beide Zahnradelemente die selbe Zahnform besitzen.

6. Getriebezahnrad nach einem der Ansprüche 1 bis 5, **dadurch gekennzeichnet, daß** beide Zahnradelemente am Teilkreisdurchmesser um etwa ein Zehntel Millimeter zueinander in Umfangsrichtung versetzt sind.

7. Getriebezahnrad nach einem der Ansprüche 1 bis 6, **dadurch gekennzeichnet, daß** das Zahnradelement mit den sich verformenden Zähnen (6) als ebene Zahnscheibe (3, Figur 1 und Figur 4) ausgebildet ist.

8. Getriebezahnrad nach einem der Ansprüche 1 bis 7, **dadurch gekennzeichnet, daß** das Zahnradelement mit den sich verformenden Zähnen (6) als tellerförmig eingezogene Zahnscheibe (3, Figur 2 und Figur 3) ausgebildet ist, wobei der Fußkreis (8) und der Kopfkreis (9) der Zähne (6) in axialer Richtung gesehen zueinander versetzt sind.

9. Getriebezahnrad nach einem der Ansprüche 7 oder 8, **dadurch gekennzeichnet, daß** die Zahnscheibe (3) durch Schrauben (4) am anderen Zahnradelement (1) befestigt ist.

10. Getriebezahnrad nach einem der Ansprüche 7 bis 9, **dadurch gekennzeichnet, daß** die Zahnscheibe (3) ein Blech aus Federstahl ist.

## Claims

1. A transmission gearwheel comprising at least two peripheral toothed parts (6, 7) which are coaxial and non-displaceably connected in the peripheral direction and have offset teeth (6, 7) such that the existing tooth flank clearance for engagement of a meshing gearwheel is reduced or eliminated, wherein at least the teeth (6) on one part (3) have elasticity such that on engagement of the meshing gearwheel, at least when the transmitted torque exceeds a certain amount, the offset of the torque-transmitting tooth (6) in the peripheral direction relative to the tooth (7) on the other part (1) is at least partly eliminated by deformation,
**characterised in that**
the gearwheel part comprising the deforming teeth (6) has notches (5, 15) centrally in the gaps between the teeth, corresponding to the tooth spacing in the radial direction.

2. A gearwheel according to claim 1, **characterised in that** at least one gearwheel part is made of metal.

3. A gearwheel according to claim 1 or claim 2, **characterised in that** both parts have the same diameter at the tip circle (9).

4. A gearwheel according to any of claims 1 to 3, **characterised in that** the part having the deforming teeth (6) has a smaller diameter at the root circle (8).

5. A gearwheel according to any of claims 1 to 4, **characterised in that** both parts have the same tooth shape.

6. A gearwheel according to any of claims 1 to 5, **characterised in that** the two gearwheel parts are offset from one another in the peripheral direction by about a tenth of a millimetre on the pitch circle diameter.

7. A gearwheel according to any of claims 1 to 6, **characterised in that** the part having the deforming teeth (6) is constructed as a flat toothed disc (3, Figure 1 and Figure 4).

8. A gearwheel according to any of claims 1 to 7, **characterised in that** the part having the deforming teeth (6) is constructed as a dish-shaped recessed toothed disc (3, Figure 2 and Figure 3), wherein the root circle (8) and the tip circle (9) of the teeth (6) are offset relative to one another in the axial direction.

9. A gearwheel according to claim 7 or claim 8, **characterised in that** the toothed disc (3) is fastened by screws (4) to the other gearwheel part (1).

10. A gearwheel according to any of claims 7 to 9, **characterised in that** the toothed disc (3) is a sheet of spring steel.

## Revendications

1. Roue dentée de transmission comportant au moins deux éléments de roue dentée ayant des dents (6, 7) en périphérie, ces éléments coaxiaux étant de manière non coulissante reliés l'un à l'autre dans la direction périphérique et avec des dents décalées (6, 7),
de sorte que pour la prise d'une roue dentée d'engrènement, le jeu existant entre les flancs des dents est diminué ou compensé,
au moins les dents (6) d'un élément de roue dentée (3) ayant une élasticité telle qu'à la prise de la roue dentée d'engrènement, au moins à partir d'un certain couple à transmettre, le décalage dans la direction périphérique de la dent (6) qui transmet ce couple par rapport à la dent (7) de l'autre élément de roue dentée (1) est au moins en partie compensé par la déformation,
**caractérisée en ce que**
l'élément de roue dentée ayant des dents déformables (6) comporte au milieu dans les intervalles entre les dents, et en fonction de la partition des dents, des entailles (5, 15) dans la direction radiale.

2. Roue dentée de transmission selon la revendication 1,
**caractérisée en ce qu'**
au moins un élément de roue dentée est en métal.

3. Roue dentée de transmission selon la revendication 1 ou 2,
**caractérisée en ce que**
les deux éléments de roue dentée ont le même diamètre au niveau du cercle de tête (9).

4. Roue dentée de transmission selon l'une quelconque des revendications 1 à 3,
**caractérisée en ce que**
l'élément de roue dentée ayant les dents déformables (6) possède un diamètre plus petit au niveau du cercle de base (8).

5. Roue dentée de transmission selon l'une quelconque des revendications 1 à 4,
**caractérisée en ce que**
les deux éléments de roue dentée ont la même forme de dents.

6. Roue dentée de transmission selon l'une quelconque des revendications 1 à 5,
**caractérisée en ce que**
les deux éléments de roue dentée sont décalés au niveau du cercle primitif, d'environ 1/10ème de millimètre l'un par rapport à l'autre dans la direction périphérique.

7. Roue dentée de transmission selon l'une quelconque des revendications 1 à 6,
**caractérisée en ce que**
l'élément de roue dentée avec des dents déformables (6) est réalisé comme disque denté plan (3, figure 1 et figure 4).

8. Roue dentée de transmission selon l'une quelconque des revendications 1 à 7,
**caractérisée en ce que**
l'élément de roues dentées ayant des dents déformables (6) est réalisé sous la forme d'un disque denté étiré en forme de coupelle (3, figure 2 et figure 3) et le cercle de base (8) et le cercle de tête (9) des dents (6) sont décalés dans la direction axiale.

9. Roue dentée de transmission selon l'une des revendications 7 ou 8,
**caractérisée en ce que**
le disque denté (3) est fixé à l'autre élément de roue dentée (1) par des vis (4).

10. Roue dentée de transmission selon l'une quelconque des revendications 7 à 9,
**caractérisée en ce que**
le disque denté (3) est en tôle d'acier à ressort.
